# EUROPÄISCHE PATENTSCHRIFT

(11) **EP 0 974 183 B1**
(45) Veröffentlichungstag und Bekanntmachung des Hinweises auf die Patenterteilung: **23.07.2003**
(21) Anmeldenummer: 98916939.6
(22) Anmeldetag: 13.03.1998
(51) Int. Cl.: H02K 1/27

(54) **ROTOR FÜR EINE ELEKTRISCHE MASCHINE, INSBESONDERE EINE TRANSVERSALFLUSSMASCHINE**
ROTOR FOR AN ELECTRICAL MACHINE, SPECIALLY A TRANSVERSAL FLOW MACHINE
ROTOR POUR MACHINE ELECTRIQUE TOURNANTE, NOTAMMENT MACHINE A FLUX TRANSVERSAL

(30) Priorität: 11.04.1997 DE 19715019
(43) Veröffentlichungstag der Anmeldung: 26.01.2000
(73) Patentinhaber: Voith Turbo GmbH & Co. KG, 89522 Heidenheim (DE)
(72) Erfinder: LANGE, Andreas, D-89551 Zang (DE); MÜHLBERGER, Uwe, D-89522 Heidenheim (DE)
(74) Vertreter: Dr. Weitzel & Partner
(86) Internationale Anmeldenummer: EP9801463
(87) Internationale Veröffentlichungsnummer: WO98047214

(56) Entgegenhaltungen:
- EP-A- 0 642 204
- EP-A- 0 712 199
- EP-A- 0 779 696
- DE-A- 4 302 807
- DE-C- 19 610 754
- FR-A- 2 606 951

## Beschreibung

Die Erfindung betrifft einen Rotor für eine elektrische Maschine, insbesondere eine Transversalflußmaschine, im Einzelnen mit den Merkmalen aus dem Oberbegriff des Anspruches 1.

Rotoren für elektrische Maschinen, insbesondere für Transversalflußmaschinen, sind in einer Vielzahl von Ausführungsmöglichkeiten hinsichtlich ihrer Gestaltung und/oder Montage, beispielsweise aus den nachfolgend genannten Druckschriften bekannt:
1. DE 92 00 116 U1
2. EP 0 642 204 A1

Der Rotor einer Transversalflußmaschine umfaßt dabei eine oder mehrere axial aneinandergereihte, durch dazwischenliegende Kunststoff- oder aus anderem, elektrisch nicht leitfähigen Material ausgeführte Ringe und/oder eine Rotorscheibe voneinander getrennte, konzentrische Ringe (Aktivringe), in denen am Umfang abwechselnd sogenannte Sammler- bzw. Weicheisenelemente, welche üblicherweise aus axial aufgeschichtetem Elektroblech aufgebaut sein können, und Magnete angeordnet sind. Diese konzentrischen Ringe werden auch als Polstruktur bezeichnet.

Die in der DE 92 00 116 U1 beschriebene Rotorausführung weist Sammler-bzw. Weicheisenelemente auf, die auf ihrer den Magnetanordnungen zugewandten Seiten in Umfangsrichtung mit U-förmigen Aussparungen versehen sind, in welchen die Magnete eingefügt werden. Durch diese Aussparungen werden zwei Vorsprünge gebildet, welche die Magnetanordnung teilweise umgreifen. Die Breite der Aussparung bzw. deren Abmaß in radialer Richtung ist dabei geringfügig größer als die Mantellänge I, d.h. die Abmessung der Magnetanordnung in radialer Richtung. Durch diese Maßnahme wird eine formschlüssige Verankerung zwischen einer jeden Magnetanordnung und den beiden benachbarten Sammler- bzw. Weicheisenelementen erreicht. Vorzugsweise wird jedoch zusätzlich eine Klebverbindung zwischen der Magnetanordnung und den Sammler- bzw. Weicheisenelementen beibehalten. Zur Vermeidung einer leitenden Verbindung zwischen den Sammler- bzw. Weicheisenelementen und den Magneten, welche zu einer starken Erwärmung des Rotors führen und auch die Magnetanordnung in ihren magnetischen Eigenschaften beeinträchtigen kann, ist im Bereich der U-förmigen Aussparungen an den Berührungsflächen zwischen Sammler- bzw. Weicheisenelement und der Magnetanordnung eine Isolierschicht vorgesehen.

Zur Realisierung kleiner Rotoranordnungen, bei welchen eine kleine Polteilung gewünscht ist, offenbart die EP 0 642 204 A1 eine Ausführung, bei welcher der Rotor in axialer Richtung eine an der Rotorachse befestigbare Rotorscheibe aufweist, an der die polarisierten Magnete und die magnetisierbaren Sammler- bzw. Weicheisenelemente jeweils in einer konzentrischen Ringanordnung befestigt sind, wobei die Befestigung mit Befestigungselementen erfolgt, die durch die polarisierten Magnete, welche wenigstens im Anordnungsbereich der Befestigungselemente zweiteilig ausgeführt sind, hindurchgehen und an der Rotorscheibe bzw. an einem in axialer Richtung mit der Rotorscheibe verbundenen Isolierringelement befestigt sind. Auch hier sind die Magnetanordnungen mit den benachbarten Sammler- bzw. Weicheisenelementen in Umfangsrichtung formschlüsig und/oder stoffschlüssig verbunden. Ein Nachteil des Einsatzes dieser zusätzlich gegenüber Schälbeanspruchung absichernder Elemente besteht vor allem darin, daß diese eine beträchtliche Vergrößerung der Rotormasse und des Rotorvolumens und damit des verlustbehafteten Aktiwolumens bedingen. Die für die Montage der Sicherungselemente vorzusehenden Bohrungen für Gewindeeinsätze und Schraubendurchgangslöcher erfordern einen hohen Fertigungs- und Bearbeitungsaufwand. Bei Anordnung der Sicherungs- bzw. Befestigungselemente durch die Aktivringe hindurch sind entweder die Magnete in geteilter Form, d.h. in doppelter Anzahl vorzusehen oder bei Durchführung bzw. Anordnung derartiger Elemente im Bereich der Sammler-bzw. Weicheisenelemente diese einem hohen Bearbeitungsaufwand und Montageaufwand ausgesetzt. Bei einem Rotor entsprechend der in der EP 0 642 204 A1 beschriebenen Ausführung sind bei hohen Drehzahlen die auftretenden Fliehkräfte nicht mehr wirtschaftlich durch den Kraft- und Stoffschluß - insbesondere Schrauben und Kleben - zu beherrschen.

Ein Nachteil derartiger Anordnungen besteht darin, daß bei Vorsehen lediglich formschlüssiger Verbindungen zwischen den Magneten der Magnetanordnung und den benachbarten Sammler- bzw. Weicheisenelementen in Umfangsrichtung aufgrund der im Betrieb des Rotors auftretenden Fliehkräfte auch bei gleichzeitiger Lagefixierung der Sammler- bzw. Weicheisenelemente gegenüber den in axialer Richtung benachbarten Elementen in radialer Richtung, wie beispielsweise Endring, Zwischenring und Trägerscheibe, die Magnetanordnungen gegen die radial äußeren Vorsprünge gedrückt werden und eine elektrisch leitfähige Verbindung zwischen Sammler- bzw. Weicheisenelementen und der Magnetanordnung ermöglichen, was zu einer unerwünschten hohen Erwärmung des Rotors führen kann. Dabei werden auch die Magnete durch die Wärmeleitung belastet und in ihren magnetischen Eigenschaften beeinträchtigt, was bis zur völligen Entmagnetisierung der Magneten führen kann. Bei Ausführungen mit auf den Sammler- bzw. Weicheisenelementen versehener Isolierschicht besteht die Gefahr, daß aufgrund der Fliehkräfte, welche auf die Magnetanordnungen wirken und die Magnetanordnungen in radialer Richtung gegen die im Bereich des äußeren Durchmessers der Sammler- bzw. Weicheisenelemente angeordneten, jeweils einen Anschlag in radialer Richtung bildenden Vorprünge an den Sammler- bzw. Weicheisenelementen drücken, die Isolierschicht in diesem Bereich am Sammler- bzw. Weicheisenelement beschädigt und eine leitende Verbindung zwischen Sammler- bzw. Weicheisenelement und Magnetanordnung hergestellt wird, was zu den bereits genannten Nachteilen führt.

Der Erfindung liegt daher die Aufgabe zugrunde, einen Rotor einer elektrischen Maschine derart weiterzuentwickeln, daß die genannten Nachteile vermieden werden. Im Einzelnen sollen bei beibehaltener Rotorfestigkeit bei Rotoren der eingangs genannten Art mit formschlüssiger Verbindung zwischen Sammler- bzw. Weicheisenelementen und Magnetanordnungen bei Versagen der Isolierschicht die zusätzlichen Verluste, welche eine starke Erwärmung des Rotors zur Folge haben und die magnetischen Eigenschaften der Magneten beeinträchtigen, vermieden werden. Der konstruktive und fertigungstechnische Aufwand ist möglichst gering zu halten.

Die erfindungsgemäße Lösung der Aufgabe ist durch die Merkmale des Anspruches 1 charakterisiert. Vorteilhafte Ausgestaltungen sind in den Unteransprüchen beschrieben.

Erfindungsgemäß ist wenigstens eines, der einer Magnetanordnung beidseitig in Umfangsrichtung unmittelbar nebengeordneten Sammler- bzw. Weicheisenelemente frei von einer wenigstens mittelbar wirksam in Anspruch nehmbaren äußeren Anschlagfläche für die Magnetanordnung in radialer Richtung. Dies bedeutet für den Formschluß, daß lediglich ein erstes der einer Magnetanordnung in Umfangsrichtung benachbarten Sammler- bzw. Weicheisenelemente wenigstens mittelbar eine Anschlagfläche in radialer Richtung für die Magnete der Magnetanordnung und damit die möglichkeit einer formschlüssigen Verankerung der Magnetanordnung mit den Sammler-bzw. Weicheisenelement bildet. Diese Anschlagfläche ist beispielsweise in Form eines an der dem Magneten in Umfangsrichtung zugewandten Stirnseite des ersten Sammler- bzw. Weicheisenelementes angeordneten Vorsprunges ausgebildet. Die Anschlagfläche bzw. der die Anschlagfläche bildende Vorsprung ist vorzugsweise im Bereich des äußeren Durchmessers des ersten Sammler- bzw. Weicheisenelementes in radialer Richtung auf einem bestimmten Durchmesser angeordnet und erstreckt sich im wesentlichen in Umfangsrichtung über einen Teil der Magnetanordnung bzw. umschließt diese. Das zweite, der Magnetanordnung auf dessen in Umfangsrichtung entgegengesetzt gerichteter Stirnseite benachbarte Sammler- bzw. Weicheisenelement ist wenigstens im Bereich seiner zur Magnetanordnung weisenden Stirnseite frei von einer derartigen äußeren Anschlagfläche für die Magnetanordnung in radialer Richtung. In diesem Fall kann das zweite, einer Magnetanordnung benachbarte Sammler- bzw. Weicheisenelement gänzlich frei von einem Vorsprung im Bereich des Außendurchmessers der Magnetanordnung sein. Denkbar ist es jedoch auch, zu Zwecken der Vorzentrierung einen Vorsprung vorzusehen, dessen zur Rotorachse weisende Fläche jedoch auf einem Durchmesser angeordnet ist, welcher größer dem ersten bestimmten Durchmesser für die Anordnung der Anschlagfläche am ersten, der Magnetanordnung benachbarten Sammler- bzw. Weicheisenelement ist. In diesem Fall ist ein entweder
1) ein bestimmter Abstand a₁ zwischen dem äußeren Durchmesser der Magnetanordnung und dem Vorsprung am Sammler- bzw. Weicheisenelement vorgesehen oder
2) bei Magnetanordnungen mit in Umfangsrichtung unterschiedlichen Abmessungen über deren Erstreckung in radialer Richtung, beispielsweise bei Magnetanordnungen mit größeren Abmessungen in Umfangsrichtung im Bereich des in radialer Richtung mittleren Teiles der Magnetanordnung ein bestimmter Abstand a₂ zwischen dem radial äußersten und sich am weitesten in Umfangsrichtung erstreckenden Teiles der Außenfläche der Magnetanordnung und den zugeordneten Vorsprüngen am Sammler- bzw. Weicheisenelement.

Damit wird eine Abstützung der Magnetanordnung unter Fliehkraftwirkung an diesem, im wesenttlichen zur Vorzentrierug dienenden Vorsprung sicher vermieden, womit auch die auf dem Sammler- bzw. Weicheisenelement vorgesehenen Isolierschicht in diesem Bereich von Schädigungen freigehalten wird. Die Gefahr der Herstellung einer leitenden Verbindung zwischen zwei, durch eine Magnetanordnung voneinander getrennten Sammler- bzw. Weicheisenelementen kann somit fast vollständig ausgeschlossen werden, da eine Beschädigung der auf den Sammler- bzw. Weicheisenelemneten aufgetragenen Isolierschicht durch hohe mechanische Beanspruchung, beispielsweise bei der Abstützung der Magnetanordnungen über diese Isolierschicht an der Anschlagfläche, welche zu einer Beschädigung und damit der Herstellung einer leitenden Verbindung führen kann, im wesentlichen auf diesen Bereich beschränkt bleibt und die Anlageflächen der Magnetanordnungen in Umfangsrichtung an den benachbarten Sammler-bzw. Weicheisenelementen nicht dieser enorm hohen Beanspruchung ausgesetzt sind, so daß eine Beschädigung der zwischen Magnetanordnung und Sammler- bzw. Weicheisenelement vorgesehenen Isolierschicht in diesem Bereich weistesgehendst ausgeschlossen ist.

Durch die erfindungsgemäße Lösung wird erreicht, daß die an einer Magnetanordnung bzw. den einzelnen Magneten einer Magnetanordnung vorzugsweise gleichmäßig wirkenden Kräfte in radialer Richtung jeweils nur an einem der beiden der Magnetanordnung benachbarten Sammler- bzw. Weicheisenelemente, insbesondere an der dafür vorgesehenen Anschlagfläche an diesem Sammler- bzw. Weicheisenelement abgestützt werden. Die Erfinder haben erkannt, daß aufgrund der Fliehkraft bei den aus dem Stand der Technik bekannten Lösungen die Magnetanordnungen in radialer Richtung gegen die an den den Magnetanordnungen unmittelbar benachbarten Sammler- bzw. Weicheisenelementen im Bereich von deren Außendurchmesser gegen die im wesentlichen in Umfangsrichtung ausgebildeten Vorsprünge, welche jeweils einen Teil der Magnetanordnung in Umfangsrichtung umschließen und einen Anschlag für die Magnetanordnungen in radialer Richtung bilden, gedrückt werden. Dabei werden aufgrund der hohen Beanspruchungen die Isolierschichten an einer Vielzahl von Verbindungen zwischen Magnetanordungen und Sammler- bzw. Weicheisenelementen über den Umfang des Rotors beschädigt, so daß zwischen Magnetanordnung und Sammler eine leitfähige Verbindung hergestellt werden, welche Ursache einer übermäßig starken Erwärmung des Rotors sein kann. Aufgrund der Vielzahl der beschädigten Stellen der Isolierschicht in Umfangsrichtung wird z.T. eine durchgängige leitfähige Verbindung in Umfangsrichtung über den gesamten Rotor hergestellt. Durch die erfindungsgemäße Lösung wird dies auf einfache Art und Weise verhindert, indem die Kräfte in radialer Richtung lediglich jeweils nur an einem der einer Magnetanordnung benachbarten Sammler- bzw. Weicheisenelemente abgestützt werden. In diesem Fall führen selbst Beschädigungen der Isolierschicht zu keiner Beeinträchtigung des Rotors und insbesondere der Eigenschaften der Magneten, da für eine thermische Schädigung durch elektrische Ströme durchgehende Verbindungen in Umfangsrichtung notwendig sind. Die der kraftaufnehmenden Anschlagfläche am Sammler- bzw. Weicheisenelement gegenüberliegende Sammler- bzw. Weicheisenelementkante, ob am gleichen Sammler- bzw. Weicheisenelement oder am nächsten, der Magnetanordnung benachbarten Sammler- bzw. Weicheisenelement stellt eine zuverlässige Sperre für diese Ströme dar.
Ein vollständiger Formschluß mit den benachbarten Sammler- bzw. Weicheisenelement ist daher nur auf einer Seite der Magnetanordnung möglich.

Die erfindungsgemäße Lösung erfordert nicht, daß das zweite des der Magnetanordnung benachbarten Sammler- und Weicheisenelemente im Bereich seines äußeren Durchmessers gänzlich frei von einem Vorsprung sein muß. Ein Vorsprung zur Vorzentrierung ist denkbar, allerdings ist dieser auf einem Durchmesser anzuordnen, auf welchem die in Richtung der Rotorachse weisende Fläche des Vorsprunges im Normalbetrieb der elektrischen Maschine, insbesondere der Transversalflußmaschine, nicht als Anschlagfläche wirksam wird.

Die einzelnen Sammler- bzw. Weicheisenelemente sind vorzugsweise aus axial geschichteten Blechelementen aufgebaut. Die Vorsprünge werden vorzugsweise durch U- förmige Aussparungen gebildet.

Vorzugsweise sind die Sammler- bzw. Weicheisenelemente bezüglich einer in radialer Richtung in Einbaulage verlaufenden Symmetrielinie unsymmetrisch aufgebaut. Dies bedeutet, daß jedes Sammler- bzw. Weicheisenelement an wenigstens einer seiner zu den Magnetanordnungen in Umfangsrichtung weisenden Stirnseiten eine Anschlagfläche zur Realisierung eines äußeren Anschlages aufweist, während die andere entgegengesetzt gerichtete Stirnfläche frei von einem derartigen wirksam werdenden Anschlag ist.
Diese Freiheirt von einem wirksam werdenden Anschlag kann durch eine gegenüber den den Anschlag bildenden Srirnseite durch
1) Aussparungen größeren Abmaßes oder
2) Weglassen eines äußeren Vorsprunges
realisiert werden.

Die Sammler- bzw. Weicheisenelemente sind in Umfangsrichtung dann vorzugsweise derart angeordnet, daß deren jeweils gleich ausgebildete Stirnseiten in Umfangsrichtung gleich ausgerichtet sind, d.h. jeweils in die gleiche Drehrichtung weisen. Dies bietet den Vorteil, daß zur Herstellung eines Rotors lediglich ein Sammler- bzw. Weicheisenelementtyp eingesetzt werden muß und eine einfache Montage gewährleistet werden kann.

Die Ausrichtung der Stirnseiten mit Anschlagfläche kann in Umfangsrichtungentweder entgegen Drehrichtung oder in Drehrichtung erfolgen. Vorzugsweise erfolgt die Ausrichtung immer in einer Richtung.

Es besteht jedoch auch die Möglichkeit, wenigstens zwei unterschiedliche Sammler- bzw. Weicheisenelementtypen - einen ersten Sammler- bzw. Weicheisenelementtyp und einen zweiten Sammler- bzw. Weicheisenelementtyp - im Rotor vorzusehen, welche wechselweise in Umfangsrichtung zwischen den Magnetanordnungen angeordnet sind. Jedes Sammler-bzw. Weicheisenelement des ersten Typs bildet im Bereich seiner beiden zu den benachbarten Magnetanordnungen in Umfangsrichtung gerichteten Stirnseiten jeweils eine radial äußere Anschlagfläche zur Abstützung der Magnetanordnung in radialer Richtung, während jedes Sammler- bzw. Weicheisenelement des zweiten Typs im Bereich seiner beiden zu den benachbarten Magnetanordnungen in Umfangsrichtung gerichteten Stirnseiten frei von einer radial äußeren Anschlagfläche zur Abstützung der Magnetanordnung ist. Jedes der Sammler- bzw. Weicheisenelemente ist dazu vorzugsweise bezüglich einer in radialer Richtung in Einbaulage verlaufenden Symmetrielinie symmetrisch aufgebaut. Auch mit einer derartigen Lösung können thermische Schädigungen vermieden werden, da eine leitfähige Verbindung nicht über eine Vielzahl der Magnetanordnungen und Sammler- bzw. Weicheisenelemente in Umfangsrichtung hergestellt werden kann aufgrund der Sperrwirkung der fehlenden Anschlagflächen an den Sammler- bzw. Weicheisenelementen.

Die Magnetanordnungen können einteilig aufgebaut sein oder aber jeweils wenigstens einen Innen- und einen Außenmagneten umfassen. Im letztgenannten Fall sind in radialer Richtung nacheinander wenigstens zwei Magnete angeordnet. Bei den in radialer Richtung nacheinander angeordneten Magnete weist der in radialer Richtung innen liegende Innenmagnet in radialer Richtung und vorzugsweise auch in Umfangsrichtung geringere Abmessungen als der Außenmagnet auf. Andere Ausführungsformen sind denkbar.

Die einzelnen Magneten der Magnetanordnungen können in radialer Richtung hinsichtlich ihres Querschnittes unterschiedlich ausgeführt sein, d.h die Verwendung beispielsweise rechteckiger oder trapezförmiger Querschnitte ist möglich.

Zusätzlich besteht die Möglichkeit, weigstens einer Mehrzahl der Magnetanordnungen ein Verbindungselement zuzuordnen, welches wenigstens der formschlüssigen Verbindung zwischen den einzelnen Reihen wechselweise angeordneter Sammler- und Weicheisenelemente mit dazwischenliegenden Magnetanordnungen in axialer Richtung, d.h. mit den den Reihen unmittelbar benachbarten Ringen, beispielsweise Endring, Zwischenring und/oder Trägerscheibe, dient. Die Anordnung des Verbindungselementes kann bei einteiliger Ausführung der Magneten oberhalb und/oder unterhalb dieser in radialer Richtung erfolgen. Bei Ausführung einer Magnetanordnung mit wenigstens zwei Magneten - einem Innen- und einem Außenmagneten wird dieses Verbindungselement vorzugsweise zwischen dem Innen- und dem Außenmagneten angeordnet, da eine derartige Anordnung eine Fixierung der einzelnen Magnete - Innen- und Außenmagnet- in radialer Richtung gewährleistet. Den Reihen aus in Umfangsrichtung wechselweise magnetisierten Magnetanordnungen mit dazwischenliegenden Sammler-bzw. Weicheisenelementen sind dazu in Umfangsrichtung in bestimmten Abständen in axialer Richtung beidseitig überstehende Elemente zugeordnet. Die überstehenden Elemente sind in dazu komplementäre Nuten an den den getrennten Reihen aus in Umfangsrichtung wechselweise magnetisierten Magnetanordnungen mit dazwischenliegenden Sammler-bzw. Weicheisenelementen benachbarten Ringen - Endring, Zwischenring und zentrale Trägerscheibe - einsteckbar. Diese Verbindungselemente mit den beidseitig überstehenden Elementen sind vorzugsweise in Form einer aus einem amagnetischen Material gefertigten Zwischenplatte ausgeführt. Bezüglich der konkreten Ausführung wird auf die Anmeldung DE 196 10 754. verwiesen, deren Offenbarungsgehalt voll umfänglich in den Offenbarungsgehalt dieser Anmeldung mit aufgenommen wird. Diese Verbindungselemente, insbesondere Zwischenplatten können zusätzlich ebenfalls eine leitfähige Verbindung zwischen zwei einer Magnetanordnung benachbarten Sammler- bzw. Weicheisenelementen bilden.

In Umfangsrichtung können diese Zwischenelemente vorzugsweise in gleichmäßigen und bestimmten Abständen entweder jeder Magnetanordnung oder einer Vielzahl, jedoch nicht allen Magnetanordnungen zugeordnet werden.

Zur Verringerung der möglichen Flächen zur Realisierung einer leitfähigen Verbindung zwischen den einzelnen Sammler- bzw. Weicheisenelementen und den Magnetanordnungen werden die Magnetanordnungen vorzugsweise derart ausgeführt, daß, insbesondere bei Ausführungen mit wenigstens einem Innen- und einem Außenmagnet, die zu den anschlagsfreien Stirnseiten weisenden Stirnfläche der Magnetanordnung keine Vorsprünge oder Aussparungen aufweist, welche wiederum zusätzliche Anlageflächen für die Sammler- bzw. Weicheisenelemente bilden würde. In Analogie gilt dies auch für die Ausgestaltung und Anordnung der Zwischenplatte bzw. des formschlüssigen Verbindungselementes. Dieses erstreckt sich ibn Umfangsrichtung immer nur maximal entsprechend der Erstreckung der Magnetanordnung in Umfangsrichtung.

Die radial äußere Anschlagfläche für die Magnetanordnung ist vorzugsweise im Bereich des äußeren Durchmessers der Magnetanordnungen angeordnet, da in diesem Fall die gesamte Magnetanordnung in der formschlüssigen Verbindung integriert sein kann. Anordnungen der radial äußeren Anschlagfläche im Bereich der Stirnflächen der Sammler- bzw. Weicheisenelemente in radialer Richtung, d.h. die radial äußere Anschlagfläche für die Magnetanordnung ist auf einem Durchmesser größer als der Innendurchmesser der Magnetanordnung und im Bereich der Erstreckung der Magnetanordnung in radialer Richtung angeordnet, sind ebenfalls denkbar, jedoch ist in diesem Fall ein Teil der Magnetanordnung von der formschlüssigen Verbindung ausgeschlossen.

Im einfachsten Fall werden die zur Realisierung der formschlüssigen Verbindung zwischen Sammler-bzw. Weicheisenelement und Magnetanordnung vorgesehenen Aussparungen am Sammle- bzw. Weicheisenelement U-förmig ausgeführt. Die beiden Schenkel bilden dann die Vorsprünge.

Vorzugsweise werden die Veränderungen zur Realisierung einer einseitigen Kraftaufnahme an den Sammler- bzw. Weicheisenelementen vorgenommen. Es ist jedoch theoretisch auch denkbar, die Voraussetzungen durch entsprechende Gestaltung der Magneten zu schaffen, allerdings ist dies fertigungstechnisch sehr aufwendig und es sind erhöhte Wirbelstromverluste zu erwarten.

Die erfindungsgemäße Lösung ist für unterschiedliche Ausführungen der Rotoren einsetzbar. Die Rotoren, umfassend eine zentrale Trägerscheibe mit wenigstens einer koaxial zur Rotorachse angeordneten Polstruktur sind dabei derart ausgeführt, daß
1) wenigstens eine, an einer Stirnseite der Trägerscheibe sich in axialer Richtung von der zentralen Trägerscheibe weg erstreckenden ringförmigen Polstruktur oder
2) beidseitig der Stirnseiten der Trägerscheibe jeweils eine Polstruktur vorgesehen wird.

Die einzelnen Polstrukturen umfassen wenigstens zwei nebeneinanderliegende, durch eine Zwischenlage aus magnetisch und elektrisch nicht leitendem Material, die auch als Zwischenring bezeichnet wird, getrennte Reihen von in Umfangsrichtung wechselweise magnetisierten Magnetanordnungen mit dazwischenliegenden Sammler-bzw. Weicheisenelementen.

Die erfindungsgemäß gestalteten Rotoren sind für jegliche Art von elektrischen Maschinen, insbesondere Transversalflußmaschinen einsetzbar.

Die erfindungsgemäße Gestaltung eines Rotors einer elektrischen Maschine, insbesondere einer Transversalflußmaschine ist nachfolgend anhand von Figuren erläutert. Darin ist im Einzelnen folgendes dargestellt:
- Fig. 1a und 1b: verdeutlichen eine erfindungsgemäße Ausführung eines Rotors mit Magnetanordnungen, umfassend einen Innen- und einen Außenmagnet;
- Fig. 2: verdeutlicht eine erfindungsgemäße Ausführung eines Rotors mit einteilig ausgeführten Magnetanordnungen.

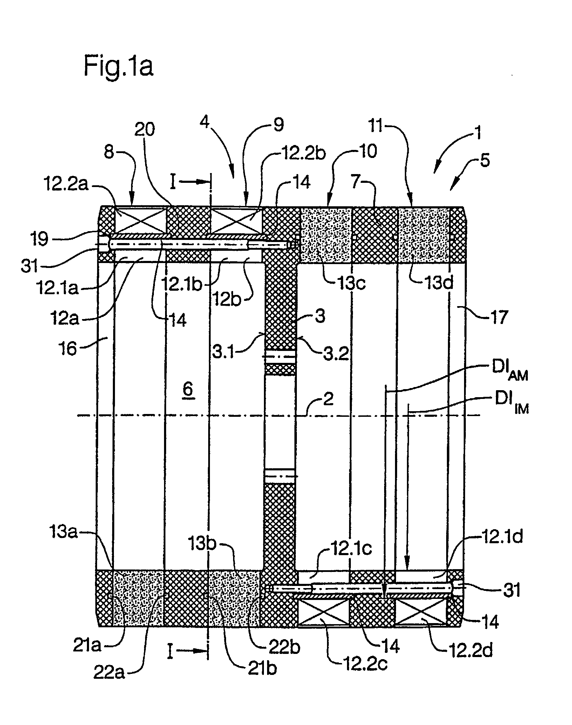

In der Figur 1a ist zur Erläuterung des Grundaufbaus eines erfindungsgemäß gestatteten Rotors vereinfacht ein Axiaischnitt durch einen Rotor 1 dargestellt. Dieser umfaßt eine, hier im einzelnen nicht dargestellte in einem Gehäuse gelagerte Rotorwelle, deren geometrische Achse 2 mit der Symmetrie- bzw. Rotationsachse des Rotors 1 zusammenfällt. Der Rotor 1 umfaßt des weiteren eine, auf der Rotorwelle drehfest angeordnete Trägerscheibe 3, an deren Stirnseiten 3.1 und 3.2 jeweils eine zur Rotorachse 2 koaxiale ringförmige Polstruktur 4 bzw. 5 angeordnet ist. Jede Polstruktur 4 bzw. 5 umfaßt jeweils zwei nebeneinanderliegende, durch eine Zwischenlage 6 bzw. 7 aus magnetisch und elektrisch nicht leitendem Material getrennte Reihen 8, 9, bzw. 10, 11 aus in Umfangsrichtung wechselweise magnetisierten Permanentmagnetanordnungen 12, hier mit 12a und 12b für die Reihen 8 und 9 bezeichnet, und dazwischenliegenden, Sammler- bzw.

Weicheisenelementen 13, hier mit 13a, 13b, 13c und 13d für die Reihen 8, 9, 10 und 11 bezeichnet. Die Sammler- bzw. Weicheisenelemente 13 sind vorzugsweise aus einer Mehrzahl von hintereinander angeordneten Blechelementen ausgeführt, welche vorzugsweise mittels einer Vergußmasse, welche gleichzeitig eine Isolierschicht auf den Sammlerelementen bildet, in Form gehalten werden. Es ist auch denkbar, die einzelnen Blechelemente mittels Stoffschluß miteinander zu verbinden.

Stirnseitig ist jeder Polstruktur 4 bzw. 5 jeweils ein Endring 16 bzw. 17 zugeordnet. Jede Magnetanordnung 12 umfaßt im wesentlichen zwei Magnete - einen Innenmagnet 12.1 und einen Außenmagnet 12.2, hier stellvertretend 12.1a, 12.2a, 12.3a, 12.4a und 12.1b, 12.2b, 12.3b, 12.4b.

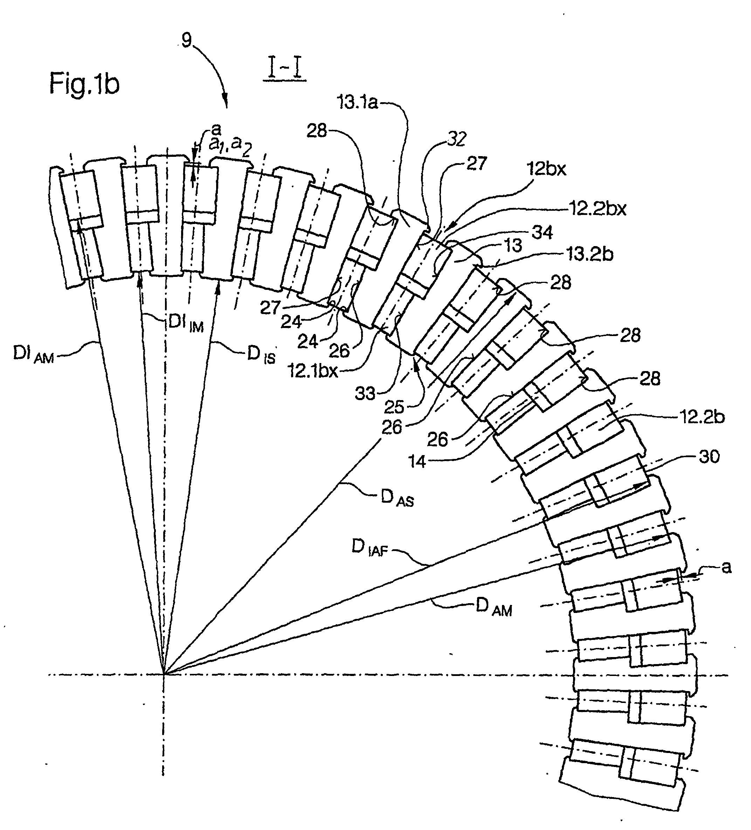

Der Innenmagnet 12.1 ist dabei in radialer Richtung bezogen auf die Rotorachse 2 auf einem kleineren Durchmesser DI_{IM} angeordnet wie der Außenmagnet 12.2 einer jeden Magnetanordnung 12. Die Fixierung der Magneten 12.1 bzw. 12.2 in Umfangsrichtung erfolgt im wesentlichen durch Formschluß mit den den Magnetanordnungen 12 in Umfangsrichtung benachbarten Sammler- bzw. Weicheisenelementen 13 wie in Figur 1b dargestellt. Zusätzlich ist der Einsatz einer Verguß- bzw. Verbundmasse, beispielsweise in Form von Kleber denkbar.

Jeder Magnetanordnung 12 ist des weiteren ein formschlüssiges Verbindungselement 14 zugeordnet. Das formschlüssige Verbindungselement 14 ist vorzugsweise als eine aus amagnetischen Blech gestanzte Platte ausgeführt. Diese erstreckt sich in axialer Richtung vorzugsweise über die axiale Erstreckung der Magnetanordnung 12 hinaus. Den so gebildeten Vorsprüngen 19 bzw. 20 sind im wesentlichen dazu komplementäre Nuten 21 bzw. 22 in den, den Ringen 8, 9, 10 bzw. 11 benachbarten Elementen zugeordnet. In Umfangsrichtung erstrecken sich die Verbindungselemente 14 jeweils im wesentlichen über die Erstreckung der Magneten 12.1 bzw. 12.2 in Umfangsrichtung. Die Verbindungselemente 14 werden in jeder Magnetanordnung 12 zwischen den Innen-und den Außenmagneten 12.1 bzw. 12.2 in die dazu komplementären Nuten 21 bzw. 22 an den den Magnetanordnungen 12 in axialer Richtung benachbarten Elementen, hier den Nuten 21a am Endring 16 und 22a am Zwischenring 6 bzw. 21b am Zwischenring 6 und 22b an der Trägerscheibe 3 eingesteckt. Unter dem Einfluß der Fliehkraft wird dadurch eine Formschluß zwischen den einzelnen Sammler- bzw. Weicheisenelementen 13 und den Magneten 12.1 bzw. 12.2 in radialer Richtung hergestellt, da das formschlüssige Verbindungselement 14 die Lage der Magneten 12.1 bzw. 12.2 der Magnetanordnungen 12 in radialer Richtung fixiert und die Magnetanordnungen 12 mit den Sammler- bzw. Weicheisenelementen 13 in Umfangsrichtung eine formschlüssige Verbindung aufweisen bzw. in ihrem Verschiebeweg in radialer Richtung begrenzt werden.
Zusätzlich können weitere kraftschlüssige Verbindungselemente vorgesehen werden, hier beispielsweise in Form von Schraubverbindungen 31, welche die Polstrukturen 4 bzw. 5 mit der Trägerscheibe 3 verspannen.

Die Figur 1b verdeutlicht in vereinfachter Darstellung eine Ansicht I-I entprechend der Figur 1a, d.h. eine Ansicht auf die Stirnseite der in Umfangsrichtung verlaufenden Polstruktur 4, im einzelnen eine Ansichtauf die Reihe 9. Jedes der den Magnetanordnungen 12 benachbarten Sammler- bzw. Weicheisenelemente 13 weist in radialer Richtung bezogen auf die Rotorachse 2 einen ersten radial innenliegenden Anschlag 24 auf. Diese innenliegenden Anschläge 24 werden jeweils von einem Vorsprung 25 gebildet, der jeweils im Bereich des inneren Durchmessers D_{IS} eines Sammler- bzw. Weicheisenelementes 13 an dessen in Umfangsrichtung und voneinander wegweisenden Stirnflächen 26 bzw. 27 angeordnet ist.

Erfindungsgemäß ist es vorgesehen, in radialer Richtung lediglich eine außenliegende Anschlagsfläche für jeweils eine Magnetanordnung 12 zu bilden. Dieser außenliegende Anschlag bzw. die Anschlagsfläche ist mit 28 bezeichnet und im dargestellten Fall im Bereich des äußeren Durchmessers D_{AS} der Sammler- bzw. Weicheisenelemente 13 an dessen Stimseite 26 derart angeordnet, daß bei Rotation des Rotors 1 unter Fliehkraftwirkung der Außenmagnet, hier stellvertretend 12.2bx mit seiner äußeren Stirnseite 30 am Anschlag 28 abgestützt wird. Der äußere Durchmesser D_{AM} der Magnetanordnung 12b bzw. des Außenmagneten 12.2b entspricht dabei dem Durchmesser D_{IAF} des Anschlages bzw. der Anschlagsfläche 28.
Wenigstens eines der beiden einer Magnetanordnung 12bx in Umfangsrichtung unmittelbar benachbarten Sammler- bzw. Weicheisenelemente 13.1b oder 13.2b, hier 13.1b ist wenigstens an der der Magnetanordnung 12 zugewandten Stirnseite 27 im Bereich des Außendurchmessers D_{AM} der Magnetanordnung 12bx frei von einem zweiten äußeren Anschlag. Im dargestellten Fall wird diese Freiheit durch die Realisierung eines bestimmten Mindestabstandes a zwischen dem äußeren Durchmesser DAM der Magnetanordnung 12bx und einem Vorsprung 32 gebildet. Der Mindestabstand a sollte dabei immer derart gewählt sein, daß eine Abstützung der Magnetanordnung 12bx, insbesondere der einzelnen Magneten 12b.1 bzw. 12b.2 in radialer Richtung an einem der beiden benachbarten Sammler- bzw. Weicheisenelemente vermieden wird.
Denkbar ist jedoch auch eine Ausführung des Sammler- bzw. Weicheisenelementes 13b frei von einem äußeren Vorsprung 32 im Bereich der Stirnseite 27.

In der in Figur 1b dargestellten Ausführung weist zwar das der Magnetanordnung 12bx benachbarte zweite Sammler- bzw. Weicheisenelement 13.1b im Bereich seiner Stirnseite 27 ebenfalls einen Vorsprung 32 auf, dieser Vorsprung dient jedoch lediglich der Vorzentrierung der Magnetanordnungen.

Die einzelnen Sammler- bzw. Weicheisenelemente 13b sind zur Realisierung der Funktion unsymmetrisch ausgebildet. Bei dieser bevorzugten Ausführung mit unsymmetrisch ausgebildeten Sammler- bzw. Weicheisenelementen 13b werden die Sammler bzw. Weicheisenelemente in Umfangsrichtung immer derart angeordnet, daß die in gleicher Weise ausgeführten Stirnseiten 26 bzw. 27 in Umfangsrichtung immer in gleicher Richtung ausgerichtet sind.

Vorzugsweise ist des weiteren vorgesehen, für Magnete 12.1b und 12.2b sowie die Zwischenplatte 14 die Zahl der Anschlagflächen und damit der möglichen gefährdeten Stellen einer Isolierschichtunterbrechung in radialer Richtung zu minimieren. Daher ist an dem, der Magnetanordnung 12bx benachbarten anschlagfreien Sammler-bzw. Weicheisenelement, hier 13.b1 neben dem radial inneren Anschlag 24 keine zuätzliche Anlagefläche in radialer Richtung für die Zwischenplatte oder die einzelnen Magneten vorgesehen. Die gesamte Magnetanordnung 12bx mit Zwischenplatte 14 liegt an einer Fläche an, während am gegenüberliegenden Sammler- bzw. Weicheisenelement 13.2b die Stirnseite 26 wenigstens zwei Teilanschlagsflächen 33 und 34 bildet.

Bei einer Ausführung entsprechend Figur 1b erfolgt der Formschluß zwischen der magnetanordnung 12bx und den Sammler- bzw. Weicheisenelementen hauptsächlich mit dem Sammler- bzw. Weicheisenelement 13.2b.

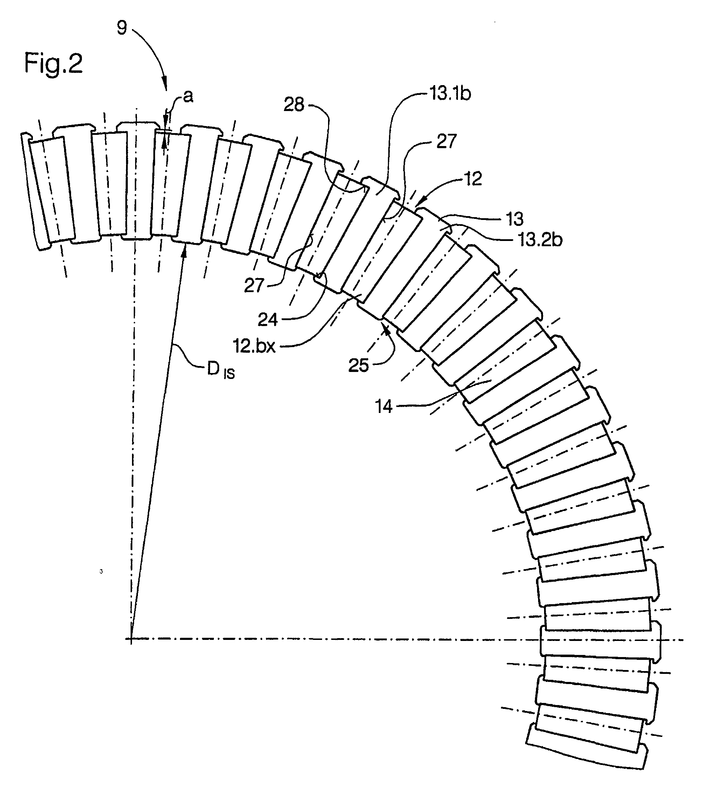

Die Figur 2 verdeutlicht eine erfindungsgemäße Ausführung zur einseitigen Kraftaufnahme in einer Ansicht auf eine Polkörperstruktur wie in Figur 1b beschrieben für eine Rotorausführung mit einteilig ausgeführter Magnetanordnung 12b. Der Grundaufbau entspricht dabei dem in der Figur 1 beschriebenen. Für gleiche Elemente werden gleiche Bezugszeichen verwendet.

Der Magnetanordnung 12b, hier zur Veranschaulichung 12bx, sind die beiden Sammler- bzw. Weicheisenelemente 13.1b und 13.2b nebengeordnet. Dabei weist das Sammler- bzw. Weicheisenelement 13.2b an seiner zur Magnetanordnung 12bx gerichteten Stirnseite im Bereich seines Außendurchmessers D_{AS} einen Vorsprung auf, welcher einen Anschlag 28 in radialer Richtung für die Magnetanordnung 12bx bildet. Das der gegenüberliegenden Seite der Magnetanordnung benachbarte Sammler- bzw. Weicheisenelement 13.1b ist an der zur Magnetanordnung weisenden Stirnseite 27 im Bereich seines Außendurchmessers D_{AS} frei von einem äußeren Anschlag in radialer Richtung. Der hier ebenfall vorgesehene Vorsprung 32 ist in einem Abstand a vom Außendurchmesser D_{AM} angeordnet.

Auch hier sind die Sammler- bzw. Weicheisenelemente 13 unsymmetrisch ausgeführt. Die jeweils gleichartig gestalteten Stirnseiten 26 und 27 sind in Umfangsrichtung gleich ausgerichtet.

## Patentansprüche

1. Rotor (1) für eine elektrische Maschine, insbesondere Transversalflußmaschine
1.1 mit wenigstens einer Polstruktur (4, 5);
1.2 die Polstruktur (4, 5) umfaßt zwei nebeneinanderliegende, durch eine Zwischenlage (6, 7) aus magnetisch und elektrisch nicht leitendem Material (Zwischenring) getrennte Reihen (8, 9, 10, 11) aus in Umfangsrichtung wechselweise magnetisierten Magnetanordnungen (12, 12a, 12b) mit dazwischenliegenden Sammler- und Weicheisenelementen (13a, 13b, 13c, 13d);
1.3 die Magnetanordnungen (12, 12a, 12b) sind mit den in Umfangsrichtung benachbarten Sammler- bzw. Weicheisenelementen (13a, 13b, 13c, 13d) formschlüssig verbunden;
1.4 die Sammler- bzw. Weicheisenelemente (13a, 13b, 13c, 13d) sind wenigstens teilweise mit einer Isolierschicht versehen; **gekennzeichnet durch** das folgende Merkmal:
1.5 wenigstens eines der einer Magnetanordnung in Umfangsrichtung benachbarten Sammler- oder Weicheisenelemente (13a, 13b, 13c, 13d) ist frei von einer radial äußeren Anschlagfläche (28) zur wenigstens mittelbaren Abstützung der Magnetanordnung (12, 12a, 12b) in radialer Richtung.

2. Rotor (1) nach Anspruch 1, **dadurch gekennzeichnet, daß** jedes Sammler- bzw. Weicheisenelement (13a, 13b, 13c, 13d) bezüglich einer in radialer Richtung in Einbaulage verlaufenden Symmetrielinie unsymmetrisch aufgebaut ist.

3. Rotor (1) nach Anspruch 2, **dadurch gekennzeichnet, daß** die Sammler-bzw. Weicheisenelemente (13a, 13b, 13c, 13d) in Umfangsrichtung derart angeordnet sind, daß deren jeweils gleich ausgebildete Stirnseiten (27, 33) in die gleiche Richtung in Umfangsrichtung gerichtet sind.

4. Rotor (1) nach Anspruch 1, **gekennzeichnet durch** folgende Merkmale:
4.1 jedes der Sammler- bzw. Weicheisenelemente (13a, 13b, 13c, 13d) ist bezüglich einer in radialer Richtung in Einbaulage verlaufenden Symmetrielinie symmetrisch aufgebaut;
4.2 es sind wenigstens zwei unterschiedliche Sammler- bzw. Weicheisenelementtypen vorgesehen - ein erster Sammler- bzw. Weicheisenelementtyp und ein zweiter Sammler- bzw. Weicheisenelementtyp, welche wechselweise in Umfangsrichtung zwischen den Magnetanordnungen (12, 12a, 12b) angeordnet sind;
4.3 jedes erste Sammler-bzw. Weicheisenelementtyp bildet im Bereich seiner beiden zu den benachbarten Magnetanordnungen (12, 12a, 12b) in Umfangsrichtung gerichteten Stirnseiten (27, 33) jeweils eine radial äußere Anschlagfläche (28) zur Abstützung der Magnetanordnung (12, 12a, 12b) in radialer Richtung;
4.4 jedes zweite Sammler- bzw. Weicheisenelement ist im Bereich seiner beiden zu den benachbarten Magnetanordnungen (12, 12a, 12b) in Umfangsrichtung gerichteten Stirnseiten (27, 33) frei von einer radial äußeren Anschlagfläche zur Abstützung der Magnetanordnung (12, 12a, 12b).

5. Rotor (1) nach einem der Ansprüche 1 bis 4, **dadurch gekennzeichnet, daß** jede der Magnetanordnungen (12, 12a, 12b) einteilig ausgeführt ist.

6. Rotor (1) nach einem der Ansprüche 1 bis 4, **dadurch gekennzeichnet, daß** eine Vielzahl der Magnetanordnungen (12, 12a, 12b) wenigstens einen Innenmagneten (12.1) und einen Außenmagneten (12.2) umfaßt.

7. Rotor (1) nach Anspruch 6, **dadurch gekennzeichnet, daß** jede Magnetanordnung (12, 12a, 12b) einen Innen- (12.1) und einen Außenmagneten (12.2) umfaßt.

8. Rotor (1) nach einem der Ansprüche 1 bis 7, **gekennzeichnet durch** die folgenden Merkmale:
8.1 den Reihen aus in Umfangsrichtung wechselweise magnetisierten Magnetanordnungen (12, 12a, 12b) mit dazwischenliegenden Sammler-bzw. Weicheisenelementen (13a, 13b, 13c, 13d) sind in Umfangsrichtung in bestimmten Abständen in axialer Richtung beidseitig überstehende Elemente (14) zugeordnet;
8.2 die überstehenden Elemente (14) sind in dazu komplementäre Nuten an den den getrennten Reihen aus in Umfangsrichtung wechselweise magnetisierten Magnetanordnungen (12, 12a, 12b) mit dazwischenliegenden Sammler-bzw. Weicheisenelementen (13a, 13b, 13c, 13d) benachbarten Ringen - Endring (17), Zwischenring (6, 7) und zentrale Trägerscheibe (3) - einsteckbar.

9. Rotor (1) nach Anspruch 8, **dadurch gekennzeichnet, daß** das Zwischenelement (6, 7) aus amagnetischen Material ausgeführt ist.

10. Rotor (1) nach einem der Ansprüche 8 oder 9, **gekennzeichnet durch** folgende Merkmale:
10.1 die überstehenden Elemente (14) sind einer Vielzahl von Magnetanordnungen (12, 12a, 12b) zugeordnet;
10.2 eine Vielzahl der Magnetanordnungen (12, 12a, 12b) weist einen Innen-(12.1a) und einen Außenmagneten (12.1b) auf;
10.3 das Zwischenelement (14) ist zwischen dem Innen- (12.1a) und dem Außenmagneten (12.2a) in radialer Richtung angeordnet und erstreckt sich in axialer Richtung über deren Ausdehnung hinaus.

11. Rotor (1) nach einem der Ansprüche 1 bis 10, **dadurch gekennzeichnet, daß** die radial äußere Anschlagfläche (28) für die Magnetanordnung im Bereich des äußeren Durchmessers (DAM) der Magnetanordnungen (12, 12a, 12b) angeordnet ist.

12. Rotor (1) nach einem der Ansprüche 1 bis 10, **dadurch gekennzeichnet, daß** die radial äußere Anschlagfläche (28) für die Magnetanordnung (12, 12a, 12b) auf einem Durchmesser größer als der Innendurchmesser (DIM) der Magnetanordnung (12, 12a, 12b) und im Bereich der Erstreckung der Magnetanordnung (12, 12a, 12b) in radialer Richtung angeordnet ist.

13. Rotor (1) nach einem der Ansprüche 1 bis 12, **gekennzeichnet durch** die folgenden Merkmale:
13.1 an den Sammler- bzw. Weicheisenelementen (13a, 13b, 13c, 13d) ist zur Realisierung des Formschlusses mit den Magnetanordnungen (12, 12a, 12b) an ihren zu den Magnetanordnungen (12, 12a, 12b) in Umfangsrichtung weisenden Stirnseiten (27, 33, 26) jeweils wenigstens eine U-förmige Aussparung vorgesehen;
13.2 jede U-förmige Aussparung bildet jeweils zwei Vorsprünge (32, 24, 25), die sich über einen Teil der benachbarten Magnetanordnung (12, 12a, 12b) in Umfangsrichtung erstrecken;
13.3 es ist ein Abstand a zwischen einem radial äußerer Vorsprung (32) einer U-förmigen Aussparung eines einer Magnetanordnung (12, 12a, 12b) benachbarten Sammler- und Weicheisenelementes (13a, 13b, 13c, 13d) und der radial äußeren Fläche der Magnetanordnung (12, 12a, 12b) in diesem Bereich radialer Richtung vorgesehen.

## Claims

1. Rotor (1) for an electric machine, in particular transverse flux machine
1.1 comprising at least one pole structure (4, 5);
1.2 the pole structure (4, 5) comprises two adjacent rows (8, 9, 10, 11), separated by an intermediate layer (6, 7) made of magnetic and electrically non-conductive material (intermediate ring), consisting of magnet arrangements (12, 12a, 12b) alternately magnetised in the circumferential direction with accumulator elements and soft iron elements (13a, 13b, 13c, 13d) located therebetween;
1.3 the magnet arrangements (12, 12a, 12b) are connected with interlocking fit to the accumulator elements and soft iron elements (13a, 13b, 13c, 13d) adjacent in the circumferential direction;
1.4 the accumulator elements and soft iron elements (13a, 13b, 13c, 13d) are at least partially provided with an insulating layer;
**characterised by** the following feature:
1.5 at least one of the accumulator or soft iron elements (13a, 13b, 13c, 13d) adjacent to a magnet arrangement in the circumferential direction is free from a radially external stop face (28) for at least indirectly supporting the magnet arrangement (12, 12a, 12b) in the radial direction.

2. Rotor (1) according to claim 1, **characterised in that** each accumulator and soft iron element (13a, 13b, 13c, 13d) is constructed unsymmetrically with respect to a line of symmetry extending in the radial direction in the fitted state.

3. Rotor (1) according to claim 2, **characterised in that** the accumulator elements and soft iron elements (13a, 13b, 13c, 13d) are arranged in the circumferential direction in such way that their respective identically formed end faces (27, 33) are oriented in the same direction in the circumferential direction.

4. Rotor (1) according to claim 1, **characterised by** the following features:
4.1 each of the accumulator elements and soft iron elements (13a, 13b, 13c, 13d) is constructed symmetrically with respect to a line of symmetry extending in the radial direction in the fitted state;
4.2 at least two different types of accumulator elements and soft iron elements are provided - a first type of accumulator element and soft iron element and a second type of accumulator element and soft iron element which are alternately arranged in the circumferential direction between the magnet arrangements (12, 12a, 12b);
4.3 each first type of accumulator element and soft iron element in the region of its two end faces (27, 33) oriented to the adjacent magnet arrangements (12, 12a, 12b) in the circumferential direction forms a respective radially external stop face (28) for supporting the magnet arrangement (12, 12a, 12b) in the radial direction;
4.4 each second accumulator element and soft iron element is, in the region of its two end faces (27, 33) oriented to the adjacent magnet arrangements (12, 12a, 12b) in the circumferential direction, free from a radially external stop face for supporting the magnet arrangement (12, 12a, 12b).

5. Rotor (1) according to any of claims 1 to 4, **characterised in that** each of the magnet arrangements (12, 12a, 12b) is formed as one part.

6. Rotor (1) according to any of claims 1 to 4, **characterised in that** a large number of the magnet arrangements (12, 12a, 12b) comprises at least one inner magnet (12.1) and one outer magnet (12.2).

7. Rotor (1) according to claim 6, **characterised in that** each magnet arrangement (12, 12a, 12b) comprises an inner magnet (12.1) and an outer magnet (12.2).

8. Rotor (1) according to any of claims 1 to 7, **characterised by** the following features:
8.1 elements (14) projecting at both sides and at certain intervals in the axial direction are associated in the circumferential direction with the rows of magnet arrangements (12, 12a, 12b) alternately magnetised in the circumferential direction with accumulator elements and soft iron elements (13a, 13b, 13c, 13d) located therebetween;
8.2 the projecting elements (14) can be inserted in complementary grooves on the rings - terminal ring (17), intermediate ring (6, 7) and central carrier disc (3) adjacent to the separated rows consisting of magnet arrangements (12, 12a, 12b) alternately magnetised in the circumferential direction with accumulator elements and soft iron elements (13a, 13b, 13c, 13d) located therebetween.

9. Rotor (1) according to claim 8, **characterised in that** the intermediate element (6, 7) is constructed from non-magnetic material.

10. Rotor (1) according to either of claims 8 or 9, **characterised by** the following features:
10.1 the projecting elements (14) are associated with a large number of magnet arrangements (12, 12a, 12b);
10.2 a large number of the magnet arrangements (12, 12a, 12b) comprise an inner magnet (12.1a) and an outer magnet (12.1b);
10.3 the intermediate element (14) is arranged between the inner magnet (12.1a) and the outer magnet (12.2a) in the radial direction and extends in the axial direction beyond the extent thereof.

11. Rotor (1) according to any of claims 1 to 10, **characterised in that** the radially external stop face (28) for the magnet arrangement is arranged in the region of the external diameter (DAM) of the magnet arrangements (12, 12a, 12b).

12. Rotor (1) according to any of claims 1 to 10, **characterised in that** the radially external stop face (28) for the magnet arrangement (12, 12a, 12b) is arranged on a diameter greater than the internal diameter (DIM) of the magnet arrangement (12, 12a, 12b) and in the region of the extension of the magnet arrangement (12, 12a, 12b) in the radial direction.

13. Rotor (1) according to any of claims 1 to 12, **characterised by** the following features:
13.1 at least one respective U-shaped recess is provided on the end faces (27, 33, 26) of the accumulator elements and soft iron elements (13a, 13b, 13c, 13d) pointing toward the magnet arrangements (12, 12a, 12b) in the circumferential direction to achieve the interlocking fit with the magnet arrangements (12, 12a, 12b);
13.2 each U-shaped recess forms two respective projections (32, 24, 25) extending over a portion of the adjacent magnet arrangement (12, 12a, 12b) in the circumferential direction;
13.3 there is a spacing a between a radially external projection (32) of a U-shaped recess of a accumulator element and soft iron element (13a, 13b, 13c, 13d) adjacent to a magnet arrangement (12, 12a, 12b) and the radially external face of the magnet arrangement (12, 12a, 12b) in this region of the radial direction.

## Revendications

1. Rotor (1) pour un moteur électrique, en particulier un moteur à flux transversal,
1.1 comprenant au moins une structure de bornes (4, 5) ;
1.2 la structure de bornes (4, 5) comporte deux rangées (8, 9, 10, 11) juxtaposées, séparées par une couche intermédiaire (6, 7), réalisée dans un matériau magnétique et non électro-conducteur(bague intermédiaire), et formées par des systèmes d'aimants (12, 12a, 12b) magnétisés en alternance dans le sens périphérique, entre lesquels sont disposés des éléments collecteurs ou éléments à fer mobile (13a, 13b, 13c, 13d);
1.3 les systèmes d'aimants (12, 12a, 12b) sont assemblés par conjugaison de forme avec les éléments collecteurs ou éléments à fer mobile (13a, 13b, 13c, 13d) contigus dans le sens périphérique ;
1.4 les éléments collecteurs ou éléments à fer mobile (13a, 13b, 13c, 13d) sont munis au moins en partie d'une couche isolante ;
**caractérisé par** les caractéristiques suivantes :
1.5 au moins un des éléments collecteurs ou éléments à fer mobile (13a, 13b, 13c, 13d), contigu dans le sens périphérique à un système d'aimants, ne comporte pas de surface de butée (28) radialement extérieure, destinée à former au moins un appui indirect pour le système d'aimants (12, 12a, 12b) dans le sens radial.

2. Rotor (1) selon la revendication 1, **caractérisé en ce que** chaque élément collecteur ou élément à fer mobile (13a, 13b, 13c, 13d) est monté de manière asymétrique par rapport à une ligne de symétrie s'étendant dans le sens radial dans la position montée.

3. Rotor (1) selon la revendication 2, **caractérisé en ce que** les éléments collecteurs ou éléments à fer mobile (13a, 13b, 13c, 13d) sont disposés dans le sens périphérique, de telle sorte que leurs faces frontales (27, 33), conçues de manière identique, sont orientées dans la même direction dans le sens périphérique.

4. Rotor (1) selon la revendication 1, **caractérisé par** les caractéristiques suivantes :
4.1 chacun des éléments collecteurs ou éléments à fer mobile (13a, 13b, 13c, 13d) est monté symétriquement par rapport à une ligne de symétrie s'étendant dans le sens radial dans la position montée ;
4.2 il est prévu au moins deux éléments collecteurs ou éléments à fer mobile - un premier type d'élément collecteur ou élément à fer mobile et un deuxième type d'élément collecteur ou élément à fer mobile -, qui sont disposés en alternance dans le sens périphérique entre les systèmes d'aimants (12, 12a, 12b) ;
4.3 chaque premier type d'élément collecteur ou élément à fer mobile, dans la zone de ses deux faces frontales (27, 33) orientées dans le sens périphérique vers les systèmes d'aimants (12, 12a, 12b) contigus, forme respectivement une surface de butée (28) radialement extérieure destinée à former un appui pour le système d'aimants (12, 12a, 12b) dans le sens radial ;
4.4 chaque deuxième type d'élément collecteur ou élément à fer mobile, dans la zone de ses deux faces frontales (27, 33) orientées dans le sens périphérique vers les systèmes d'aimants (12, 12a, 12b) contigus, ne comporte pas de surface de butée (28) radialement extérieure destinée à former un appui pour le système d'aimants (12, 12a, 12b).

5. Rotor (1) selon une des revendications 1 à 4, **caractérisé en ce que** chacun des systèmes d'aimants (12, 12a, 12b) est conçu en une seule pièce.

6. Rotor (1) selon une des revendications 1 à 4, **caractérisé en ce qu'**une pluralité de systèmes d'aimants (12, 12a, 12b) comporte au moins un aimant interne (12.1) et un aimant externe (12.2).

7. Rotor (1) selon la revendication 6, **caractérisé en ce que** chaque système d'aimants (12, 12a, 12b) comporte un aimant interne (12.1) et un aimant externe (12.2).

8. Rotor (1) selon une des revendications 1 à 7, **caractérisé par** les caractéristiques suivantes :
8.1 les rangées formées par des systèmes d'aimants (12, 12a, 12b) magnétisés en alternance dans le sens périphérique, entre lesquels sont disposés des éléments collecteurs ou éléments à fer mobile (13a, 13b, 13c, 13d) sont associées à des éléments (14) en saillie sur les deux côtés dans le sens axial, disposés à des distances déterminées dans le sens périphérique ;
8.2 les éléments (14) en saillie peuvent être enfichés dans des rainures complémentaires au niveau des bagues - bague d'extrémité (17), bague intermédiaire (6, 7) et disque support (3) central - contiguës aux rangées séparées, formées par des systèmes d'aimants (12, 12a, 12b) magnétisés en alternance dans le sens périphérique, entre lesquels sont disposés des éléments collecteurs ou éléments à fer mobile (13a, 13b, 13c, 13d).

9. Rotor (1) selon la revendication 8, **caractérisé en ce que** l'élément intermédiaire (6, 7) est réalisé dans un matériau amagnétique.

10. Rotor (1) selon la revendication 8 ou 9, **caractérisé par** les caractéristiques suivantes :
10.1 les éléments en saillie (14) sont associés à une pluralité de systèmes d'aimants (12, 12a, 12b) ;
10.2 une pluralité de systèmes d'aimants (12, 12a, 12b) comporte un aimant interne (12.1) et un aimant externe (12.2) ;
10.3 l'élément intermédiaire (14) est agencé dans le sens radial entre l'aimant interne (12.1) et l'aimant externe (12.2) et s'étend dans le sens axial au-delà de la longueur de ceux-ci.

11. Rotor (1) selon une des revendications 1 à 10, **caractérisé en ce que** la surface de butée (28) radialement extérieure pour le système d'aimants est agencée dans la zone du diamètre extérieur (DAM) des systèmes d'aimants (12, 12a, 12b).

12. Rotor (1) selon une des revendications 1 à 10, **caractérisé en ce que** la surface de butée (28) radialement extérieure pour le système d'aimants (12, 12a, 12b) est agencée sur un diamètre supérieur au diamètre intérieur (DIM) du système d'aimants (12, 12a, 12b) et, dans le sens radial, dans la zone de l'extension du système d'aimants (12, 12a, 12b).

13. Rotor (1) selon une des revendications 1 à 12, **caractérisé par** les caractéristiques suivantes :
13.1 les éléments collecteurs ou éléments à fer mobile (13a, 13b, 13c, 13d) comportent au niveau de leurs faces frontales (27, 33, 26), orientées dans le sens périphérique vers les systèmes d'aimants (12, 12a, 12b), au moins un évidement en forme de U, en vue de réaliser l'assemblage par conjugaison de forme avec les systèmes d'aimants (12, 12a, 12b) ;
13.2 chaque évidement en forme de U forme deux saillies (32, 24, 25), qui s'étendent dans le sens périphérique sur une partie du système d'aimants (12, 12a, 12b) contigu ;
13.3 une distance a est prévue entre une saillie (32) radialement extérieure d'un évidement en forme de U dans un élément collecteur ou élément à fer mobile (13a, 13b, 13c, 13d), contigu à un système d'aimants (12, 12a, 12b), et la surface radialement extérieure du système d'aimants (12, 12a, 12b) dans cette zone dans le sens radial.
